# EUROPEAN PATENT SPECIFICATION

(11) **EP 4 193 629 B1**
(45) Date of publication and mention of the grant of the patent: **02.04.2025**
(21) Application number: 21778311.7
(22) Date of filing: 01.09.2021
(51) Int. Cl.: H04W 12/082, H04W 12/033, H04W 12/08, H04L 9/40

(54) **SMART COMPUTING DEVICE IMPLEMENTING NETWORK SECURITY AND DATA ARBITRATION**
INTELLIGENTE RECHNERVORRICHTUNG ZUR IMPLEMENTIERUNG VON NETZWERKSICHERHEIT UND DATENARBITRIERUNG
DISPOSITIF INFORMATIQUE INTELLIGENT METTANT EN OEUVRE UNE SÉCURITÉ DE RÉSEAU ET UN ARBITRAGE DE DONNÉES

(30) Priority: 05.11.2020 US 202017090763
(43) Date of publication of application: 14.06.2023
(73) Proprietor: T-Mobile Innovations LLC, Bellevue, WA 98006 (US)
(72) Inventor: CALLENDER, Christopher, Overland Park, KS 66221 (US); KUNTZ, Brian, Paola, KS 66071 (US); PACZKOWSKI, Lyle W., Mission Hills, KS 66208 (US); SVOREN, Michael D., Overland Park, KS 66223 (US)
(74) Representative: Suddaby, Mark Edward
(86) International application number: PCT/US2021/048704
(87) International publication number: WO 2022/098423

(56) References cited:
- WO-A1-2018/231197
- US-A1- 2018 077 067
- DILLON MARION ET AL: "Virtualization of Home Network Gateways", COMPUTER, IEEE, USA, vol. 47, no. 11, 1 November 2014 (2014-11-01), pages 62 - 65, XP011564866, ISSN: 0018-9162, [retrieved on 20141121], DOI: 10.1109/MC.2014.338

## Description

### BACKGROUND

In a location that includes multiple smart appliances, or appliances that include Internet connectivity, security concerns can arise. The security concerns can result from numerous incoming and outgoing data connections through a network existing at the location, terminating at, or being initiated by, the smart appliances. The security concerns can result in the disclosure of personal, potentially personal, compromising, or other information generally preferred to be non-disclosed, to persons other than occupants of the location.

WO 2018/231197 A1 relates to a user equipment appending a header to a non-access stratum (NAS) message to form an encapsulated NAS message. The header is formed according to a wireline access network protocol. The user equipment transmits the encapsulated NAS message over a wireline connection between the user equipment and an interworking function of a core network. The interworking function receives the encapsulated NAS message over the wired connection and forwards the NAS message to a core network entity selected based on addressing information included in the header. A point-to-point control plane session can be established between the user equipment and the interworking function in response to a session request transmitted by the user equipment. The point-to-point control plane session can be used to convey encapsulated NAS messages, which can be used to request establishment of an NAS session for a user plane connection to the core network.

Non-patent publication to Dillon Marion et al entitled "Virtualization of Home Network Gateways" discloses a virtual gateway that combines software-defined networking with virtualization to handle the increasing demand for device connection and innovative home services.

US 2018/077067 A1 discloses detecting network traffic of a traffic flow at a traffic controller of a first portion of a software-defined network, wherein the detected network traffic is based on a service of a number of services. A source of the detected network traffic is identified based on the detected traffic, wherein the traffic flow is between a subscriber device and a service platform. The service is identified based on the detected network traffic, and a service requirement is determined based on the identifying of the service. A virtual network function of a plurality of virtual network functions is selected based on the source of the network traffic and the service requirement, and a traffic flow is facilitated between the subscriber device and the service platform by way of the virtual network function.

### SUMMARY

The invention is defined by the appended claims. Claim 1 defines a method implemented in a network. In the following, any method and/or apparatus referred to as embodiments but nevertheless do not fall within the scope of the appended claims are to be understood as examples helpful in understanding the invention. In at least some examples, the method includes writing: to a network resource function of a core network, a marker associated with a smart device. The method also includes allocating, via the core network, a network slice between the core network and the smart device having the smart device as a network function virtualization (NFV) endpoint. The method also includes allocating, via the core network, a user plane function to the smart device. The method also includes receiving a request to allocate a second user plane function to the smart device. The method also includes denying the request to allocate the second user plane function to the smart device based on the marker in the network resource function of the core network and the allocated user plane function.

Other aspects of the disclosure provide for a smart device. In at least some unclaimed examples, the smart device includes a processor, a non-transitory memory coupled to the processor, and an artificial intelligence electronic assistant application stored in the non-transitory memory. When executed by the processor, the artificial intelligence electronic assistant application receives a request from an appliance in a same local network as the smart device, the request to transfer first data from the appliance to a first device located outside the local network and facilitates the transfer of the first data from the appliance to the first device based at least in part on security policies of the smart device and content of the first data.

In an unclaimed example, there is provided a method implemented by a smart device executing an artificial intelligence electronic assistant application. In the example, the method includes receiving a request from an appliance in a same local network as the smart device, the request to transfer first data from the appliance to a first device located outside the local network. The method also includes facilitating the transfer of the first data from the appliance to the first device based at least in part on security policies of the smart device and content of the first data.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2 is a flow chart of an illustrative method according to an embodiment of the disclosure.
FIG. 3 is a flow chart of an illustrative method according to an embodiment of the disclosure.
FIG. 4A is an exemplary communication system according to an embodiment of the disclosure.
FIG. 4B is an exemplary core network according to an embodiment of the disclosure.
FIG. 5A is an example software environment according to an embodiment of the disclosure.
FIG. 5B is an example alternative software environment according to an embodiment of the disclosure.
FIG. 6 is block diagram of an illustrative computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

Smart home devices continue to become more prevalent and ingrained in the daily lives of users. As used herein, a smart home device is a device that provides functionality to a user that is facilitated by, or augmented by, Internet or other network connectivity. At least some smart home devices may also be referred to as Internet of Things (IoT) devices. Additionally, while the smart home devices are discussed herein with reference to a home, they are equally applicable to, and may be implemented in, other locations such as office buildings, vehicles, etc., and the considerations and teachings of this disclosure apply to all such locations or environments. A non-exhaustive list of example smart home devices includes a network-enabled television, a network-enabled heating, ventilation or air conditioning (HVAC) controller, a network-enabled power supply or switch (e.g., light switch, fan switch, etc.), a network-enabled refrigerator or other kitchen appliance, a network-enabled garage door or garage door opener, network-enabled occupancy sensors, a network-enabled electronic assistant, etc.

To provide at least a portion of their intended functionality, these devices may be a termination point for data connections passing through a network of the home or the point of initiation for data connections passing through a network of the home. A user may be provided some limited control over the data connections, or data that is transmitted via the data connections. However, the user may be unable to both utilize the smart home devices in their intended manner and control the flow of data to or from the smart home devices. For example, a user may wish for a network-enabled HVAC controller to modify a temperature of air in the home based on an outdoor temperature at the home, received by the network-enabled HVAC controller via the Internet based on one or more weather sensors located nearby the home but not directly in communication with the HVAC controller. The user may further wish for the network-enabled HVAC controller to modify the temperature of air in the home based on detected occupancy of the home, such as to reduce energy consumption when the user is not present at the home. However, the user may not wish for the network-enabled HVAC controller to report information related to the user's absence from the home to persons or entities outside the user's home network. Conventional implementations of the smart home devices may not afford the user the option to both utilize the network-enabled HVAC controller for its intended, and the user's desired, purpose while also permitting the user to have the control over the user's data to prevent undesirable data disclosure or dissemination. Additionally, each of these smart home devices that create a connection through the user's home network creates a vector for malicious actors to attack to gain unauthorized access to, or control of, the smart home device associated with the connection or other devices with which the smart home device is capable of electronically communicating via the user's home network.

Aspects of the present disclosure provide for a system that interfaces between smart home devices and an external network. The system is, in some examples, a security device or a device that provides, implements, or performs at least some network security functions. In some examples, the system includes further functionality such as being a network gateway device, a mobile hotspot, an electronic assistant, etc. For each smart home device registered with the system, the system operates as a conduit or gatekeeper for data transfer and connections between the smart home device and devices, persons, or entities outside the home network. In some examples, for at least some of the smart home devices registered with the system, the system operates as a conduit or gatekeeper for data transfer and connections among the smart home devices within the home network.

By functioning as the conduit or gatekeeper for data transfer and connections associated with the smart devices, in at least some examples, the system implements a security paradigm over the smart home devices that are registered with the system. This security paradigm can be considered as having at least two layers. At a first layer, the system provides each smart home device registered with the system with an internal identifier. The system hides this internal identifier such that it is only visible to devices outside, or both inside and outside, the home network when expressly permitted by the system. In this way, the system is the arbiter for data allowed to pass to or from the smart home devices that are registered with the system. This can have at least two functions, a first of which being reducing an ability for malicious actors to identify and attack the smart home devices and a second of which being an ability for the system to prevent the reporting of data by the smart home devices that users of those smart home devices prefer be maintained as undisclosed data. At a second layer, at least some networks enable the creation and use of multiple network tunnels or network slices for communication. At least one such network is a network operating according to 5G communication protocols or standards. In such a network, a marker or other indicator may be included in configuration information such that when one network connection (e.g., tunnel, slice, etc.) is established for the system, others are prohibited. In this way, the system further operates as the conduit for communication to or from the smart home devices, preventing bypassing of the system to access the smart home devices directly.

As described above, in at least some examples, the system is an arbiter for data transmission to or from the smart home devices. For example, inbound data to the smart home devices, or outbound data originating at the smart home devices, may be analyzed, screened, or otherwise filtered, and based on those actions either permitted, permitted (or blocked) in part, or blocked. For example, the smart home devices and the system may together form an ecosystem that is managed by the system, whether those smart home devices are in a same local area network (LAN) as the system or spread across multiple LANs but still managed by the system. At least some implementations of the system may intercept communications that are inbound to the LAN and destined for one of the smart home devices or communications that originate with one of the smart home devices and are output from the LAN. The system may analyze or parse the communications to determine any one or more characteristics of the communication such a source, destination, and/or content of the communications.

Based on the characteristics of the communications, the system may permit, permit (or block) in part, or block the communication. For example, the system may compare any one or more of the characteristics to an allowed list, or a blocked list, and act accordingly if the compared characteristic is found in one of the respective lists. As one example, the system may compare a destination for the communications to the allowed list and/or to the blocked list, and allow the communication if the destination is in the allowed list. Conversely, if the destination is in the blocked list, the system may block the communications from transmission outside the LAN. If the destination is neither in the allowed list nor in the blocked list, the system may query a user for instructions related to the communications. Based on the received instructions, the allowed list and/or the blocked list may be updated such that future communication to the same destination may be automatically arbitrated without querying the user.

Similarly, the system may compare content of the communications to an allowed list, or a blocked list, and act accordingly if the compared characteristic is found in one of the respective lists. Similar to the above, the communications may be allowed or blocked based on a result of the comparison and/or user input in response to a query if the content type is not found in either the allowed list or the blocked list. In addition, the communications may be partially allowed or partially blocked. For example, a portion of the content may be allowed and a portion of the content may be blocked. In such an example that system may strip the blocked content from the communications and allow a remainder of the communications to proceed to their identified and allowed destination. The allowed and blocked content lists may be developed in an ongoing manner based on user input, network feedback, third-party risk analysis, etc. In some examples, the allowed and blocked content lists may be developed over time based on analysis assessing how different smart home devices send different types of data. This analysis could be based messages or communications inbound to, or outbound from, the LAN.

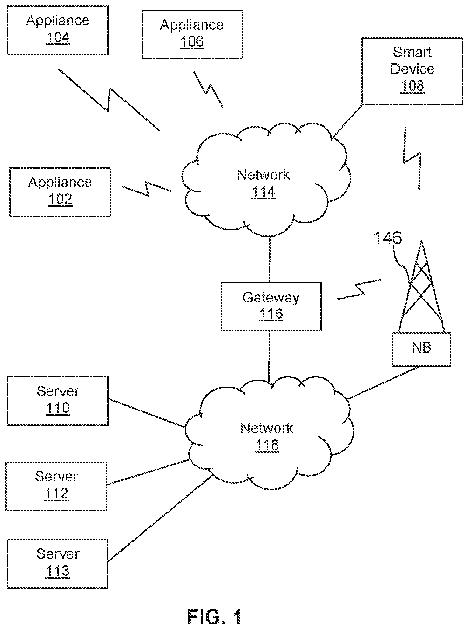

Turning now to FIG. 1, a block diagram of an illustrative system 100 is described. In at least one example, the system 100 includes an appliance 102, an appliance 104, an appliance 106, a smart device 108, a server 110, a server 112, a server 113, a network 114, a gateway 116, and a network 118. In at least some examples, the appliance 102, the appliance 104, the appliance 106, and the smart device 108 are located in a first location such as a house, an office building, etc. and are communicatively coupled together via the network 114. The network 114 is, in some examples, communicatively coupled to the network 118 via the gateway 116. The server 110 is, in some examples, associated with one or more of the appliance 102, the appliance 104, and/or the appliance 106 and is communicatively coupled to the network 114 via the network 118. The server 112 is, in some examples, associated with the smart device 108 and is communicatively coupled to the smart device 108 via the network 114, gateway 116, and network 118.

At least some implementations of the smart device 108 function as a security device, at least partially securing operation of the appliance 102, the appliance 104, and/or the appliance 106. For example, after one of the appliance 102, the appliance 104, or the appliance 106 is registered with the smart device 108, or the server 112, communication to that one of the appliance 102, the appliance 104, or the appliance 106 passing between the network 114 and the network 118 passes through the smart device 108. In this way, the smart device functions as a gatekeeper or arbiter of the data communication. In at least some examples, data communication among the appliance 102, the appliance 104, and/or the appliance 106 within the network 114 also passes through the smart device 108. In such examples, the smart device 108 is the gate keeper or arbiter of both wide area network data communication (e.g., data communication between networks 114 and 118) and local area network data communication (e.g., data communication within the network 114) for the one or more of the appliance 102, the appliance 104, and/or the appliance 106 that have been registered with the smart device 108 or the server 112.

At least some implementations of the smart device 108 implement an artificial intelligence overlay that operates as an electronic assistant. In some examples, the smart device 108 is a purpose-built device. In other examples, the smart device 108 is implemented as an executable on any device having suitable processing capacity, such as a desktop computer, a server computer, a laptop computer, processor in an automobile or other transportation vehicle, a television, a phone, a wearable device, an IoT device, etc. By implementing the artificial intelligence overlay on one of the above computing devices, such computing device becomes a smart device (e.g., the smart device 108).

The appliances 102, 104, and 106 are any devices having smart, or loT, functionality, as discussed above. For example, various implementations of the appliance 102, appliance 104, and/or appliance 106 include a smart light switch, a smart television, a smart audio system, a smart thermostat device or other climate control device, smart refrigerator, a smart coffee maker or other consumer device, etc. The network 114 is, in some examples, a local area network. For example, in some implementations the network 114 is a home network provided by one or more access points and operating according to conventional wireless technologies such as via a Bluetooth^{®} interface or an IEEE 802.11 compliant wireless interface. The network 118 is, in some examples, a wide area network. For example, the network 118 is a network or a communications service provider and is communicatively coupled to the gateway 116 via a wired or wireless distribution network. For example, the network 118 may be communicatively coupled to the gateway 116 via wired cables such as copper-based cables or fiber-optic cables. Alternatively, the network 118 may be communicatively coupled to the gateway 116 via wireless protocol(s) implemented via radio transceiver cards that promote radio communications using protocols such as code division multiple access (CDMA), global system for mobile communications (GSM), long-term evolution (LTE), Fifth Generation (5G), and/or other air interface protocol(s).

The gateway 116 is any device suitable for facilitating communication between the network 114 and the network 118. Accordingly, in some examples, the gateway 116 is a router. While the gateway 116 illustrated as having a hardwired connection to the network 118, in some examples such a connection does not exist. Instead, in such examples the gateway 116 is communicatively coupled to the network 118 via a Node B (NB) 146. The NB 146 may be an enhanced NB (eNB) used in LTE communications, a gigabit NB (gNB) used in 5G communications or 5G New Radio communications, or any other access node according to any suitable radio access technology to communicatively couple the gateway 116, wirelessly, to the network 118. In such examples, the gateway 116 may be a mobile hotspot that communicates with the network 118 via the NB 146 and is coupled to the network 114. In yet other examples, the gateway 116 also includes wireless router functionality such that the gateway 116 generates or creates the network 114. Further, in at least some examples, and although illustrated separately in FIG. 1, the smart device 108 and the gateway 116 are co-located in a same device. For example, the gateway 116 may be a mobile hotspot that enables a device, communicatively coupled wirelessly or via a wired connection to the gateway 116, to be communicatively coupled to the NB 146 and network 118 and also has processing capability. That processing capability of the gateway 116 may implement the artificial intelligence overlay (e.g., an artificial intelligence software application) that operates as the electronic assistant and/or the data arbiter, as discussed elsewhere herein.

For the sake of ease of discussion, the appliance 102 will be discussed herein as communicating with the server 110. Although other servers are not shown, the teachings of this disclosure are also applicable to communication between the appliance 102 and one of these unshown servers, between the appliance 104 and/or the appliance 106 and the server 110, and/or between the appliance 104 and/or the appliance 106 and one or more of the unshown servers. Said more generally, at least some aspects of the present disclosure provide for a security paradigm implemented by the smart device 108 with respect to communication with one or more of the appliances 102, 104 and/or 106. This security paradigm is applicable regardless of from/to which appliance registered with the security device 108 or server 112 or from/to which server the data communications flow.

To begin, the appliance 102 is registered with the smart device 108, or the server 112. After the appliance 102 is registered with the smart device 108, or the server 112, the smart device 108 assigns a unique identifier to the appliance 102 and operates as an arbiter for WAN communication of the appliance 102. In some other examples, the smart device 108 further operates as an arbiter for LAN communication of the appliance 102. The smart device 108 performs such arbitration, in some examples, based on changes made according to the registration process. For example, based on the registration process, the appliance 102 is programmed (such as via an application programming interface (API)) or controlled to only communicate WAN data through the smart device 108 and/or communicate WAN and LAN data through the smart device 108. Similarly, the server 110 may be programmed (such as via an API) or controlled to only communicate with the appliance 102 through the smart device 108.

When the appliance 102 attempts to establish a WAN data connection, that data connection is managed by the smart device 108. For example, the smart device 108 maintains a database of security policies related to the network 114 and/or the smart device 108. These security policies may be modified by a user, such as to control a flow of the user's data out of the network 114 or data connections into the network 114. When the appliance 102 attempts to establish the WAN data connection, the smart device 108 permits or prohibits establishment of the data connection based on the security policies. In other examples, the smart device 102 itself establishes the data connection at the request of the appliance 102 and subject to the data connection being authorized according to the security policies. In this way, the appliance 102 does not have direct or unmanaged communication with another device other than the smart device 108 within the network 114 and/or with a device outside the network 114. For example, the security policies may permit the appliance 102 to establish, or request establishment of, a data connection to the server 110 while prohibiting the appliance 102 from establishing a data connection to a server (not shown) other than the server 110.

In yet further examples, after a data connection is established, the smart device 108 monitors content of data transmissions from the appliance 102. For example, via a data connection authorized by the security policies, some data may be authorized for transmission while other data is not. For example, the security policies may permit the appliance 102 to report a first data point to the server 110 while prohibiting the appliance 102 from reporting a second data point to the server 110. An example of such a circumstance may be when the first data point is relevant to a user's desired operation for the appliance 102 and the second data point is irrelevant to the user's desired operation for the appliance 102, potentially reveals confidential or compromising information of the user, or generally reveals information that the user wishes not to be revealed outside the network 114. As a use case example of such a circumstance, the appliance 102 may be a smart thermostat that can automatically adjust a temperature to which an HVAC system regulates air based on occupancy of a home and detected or measured external temperature near the home. In such a circumstance the security policies may permit the appliance 102 to report the detected or measured external temperature near the home to the server 110 for crowdsourcing data while preventing the appliance 102 from reporting to the server 110 that no occupancy of the home is detected. In this way, information that a user may be away from home is prevented from being reported outside the home. Further, in some examples, the security policies may permit first data of the appliance 102 to be sent to the server 110 and prohibit second data of the appliance 102 from being sent to the server 110, while also prohibiting the first data from being sent to another server (not shown) but permitting the second data to be sent to the another server. In this way, security of data of the appliance 102 is further maintained by the smart device 108.

Some communication protocols, such as 5G, enable the establishment of multiple communication tunnels or connections. In some examples, the creation of additional communication tunnels may be a vector for attempted access by a malicious or unauthorized party to the smart device 108 and/or to the appliance 102. The server 112 may control creation of these communication tunnels to the smart device 108, as will be discussed in greater detail elsewhere herein. The communication tunnels are created according to, in some examples, a network resource function that allocates user plane functions. In some implementations of the system 100, a marker is added to the network resource function. The marker is added to the network resource function, in some examples, by modifying the network resource function through an API associated with the server 112 and/or the network resource function. The marker indicates to the server 112 that only one communication tunnel should be set up to the smart device 108, for example, by allocating only one user plane function to the smart device 108 at a time. Thus, once a user plane function has been established or allocated between the smart device 108 and the network 118, the server 112 will, based on the presence of the marker in the network resource function, refuse to establish second or more communication tunnels to the smart device 108. In some examples, in response to refusing to establish the second or more communication tunnels, the server 112 may send a notification of the attempted connection and refusal to the smart device 108 or to any other suitable device.

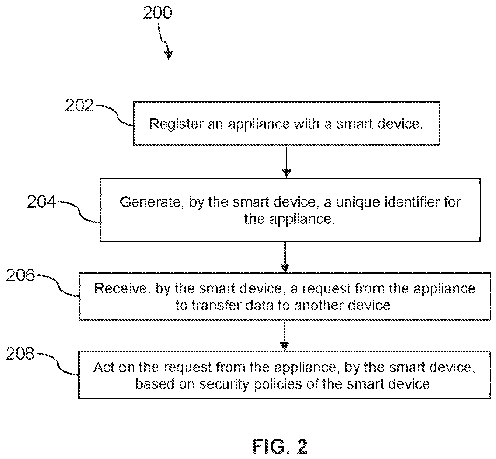

FIG. 2 illustrates a flowchart of a method 200 for data arbitration in a network. The method 200 is implemented, in some examples, by a smart device such as the smart device 108 of the system 100, described above with respect to FIG. 1. The smart device implements the method 200, in some examples, to control a flow of data originating with an appliance in the network, out of the network.

At operation 202, an appliance is registered with the smart device. The appliance is registered with the smart device according to any suitable process, the scope of which is not limited herein. The appliance registering with the smart device, in at least some examples, subscribes the appliance to have at least a portion of data communication originating at the appliance controlled by the smart device. For example, the smart device arbitrates requests by the appliance to establish communication sessions and/or transfer data over established communication sessions. In this way, after registering with the smart device, data traffic originating at the appliance is routed or funneled through the smart device.

At operation 204, the smart device generates a unique identifier for the appliance. The unique identifier is distinguishable from publicly known identifiers for the appliance and is, in at least some examples, exclusive to the network. For example, the unique identifier may not exist outside of the network and, in some implementations, may only be visible or accessible to devices outside of the network if permitted by the smart device. Such permission may be recorded in security policies of the smart device which may be stored locally on the smart device or remotely, either within the network or external to the network, and accessed by the smart device.

At operation 206, the smart device receives a request from the appliance to transfer data to another device. In some examples, the request is to transfer data to another device within the network. In other examples, the request is to transfer data to a device outside the network. Further, in at least some examples the request includes the creation of a data communication link between the appliance and another device within, or outside, the network.

At operation 208, the smart device acts on the request based on the security policies of the smart device. The security policies of the smart device, in at least some examples, are user controllable such that a user may maintain full ownership and control of their data generated by the appliance. For example, the user may control the security policies to permit data connections to only certain devices within, or external to, the network, to permit the transfer of only certain types of data, to prevent an appliance from transferring data outside the network whatsoever, to prohibit the transfer of certain types of information, etc.

Acting on the request may take various forms depending on the data associated with the request and the security policies. For example, acting on the request may include blocking the transfer of data. Additionally, or alternatively, acting on the request may include allowing the transfer of data. Additionally, or alternatively, acting on the request may include allowing the transfer of data to a first device, either within or outside the network, and blocking the transfer of data to a second device, either within or outside the network. Additionally, or alternatively, acting on the request may include allowing the transfer of some data to a device either within or outside the network and blocking the transfer of other data to the same device. Additionally, or alternatively, acting on the request may include establishing, or blocking the establishment of, a communication tunnel or connection to a device within or outside the network. In at least some examples, the smart device acts on the request based on contents of the request or data associated with the request, and the security policies, without user action in response to the request, indicating how to act on the request. In other examples, the user may be presented with a notification soliciting input on whether to permit or deny data transfer according to the request.

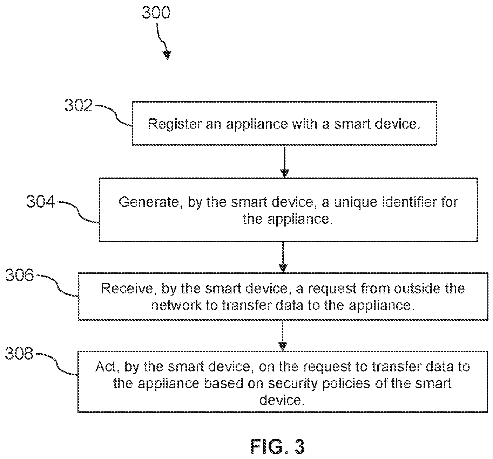

FIG. 3 illustrates a flowchart of a method 300 for data arbitration in a network. The method 300 is implemented, in some examples, by a smart device such as the smart device 108 of the system 100, described above with respect to FIG. 1. The smart device implements the method 300, in some examples, to control a flow of data terminating with an appliance in the network, such as data transfer or a data connection originating outside the network. In at least some examples, the method 300 is complementary to the method 200 such that both methods are implemented together by the same smart device.

At operation 302, an appliance is registered with the smart device. The appliance is registered with the smart device according to any suitable process, the scope of which is not limited herein. The appliance registering with the smart device, in at least some examples, subscribes the appliance to have at least a portion of data communication terminating at the appliance controlled by the smart device. For example, the smart device arbitrates requests to establish communication sessions and/or transfer data over established communication sessions to the appliance, such as from outside the network. In this way, after registering with the smart device, data traffic terminating at the appliance is routed or funneled through the smart device to the appliance.

At operation 304, the smart device generates a unique identifier for the appliance. The unique identifier is distinguishable from publicly known identifiers for the appliance and is, in at least some examples, exclusive to the network. For example, the unique identifier may not exist outside of the network and, in some implementations, may only be visible or accessible to devices outside of the network if permitted by the smart device. Such permission may be recorded in security policies of the smart device which may be stored locally on the smart device or remotely, either within the network or external to the network, and accessed by the smart device.

At operation 306, the smart device receives a request from outside the network to transfer data to the appliance. In at least some examples the request includes the creation of a data communication link between a device outside the network and the appliance. In at least some examples, the smart device is connected, or electronically or communicatively coupled, to a remote network that includes, or is also electronically or communicatively coupled to, the device outside the network. For example, the smart device may be a virtual network function endpoint or associated with the remote network. The remote network may, in some examples, see the smart device via a network function virtualization (NFV) slice without seeing any appliances within the network that have been registered with the smart device (unless the smart device allows such visibility of those registered appliances). In some examples, the remote network is permitted only one connection (e.g., slice, network tunnel, user plane function, etc.) to the smart device, thereby enhancing security of the smart device by reducing potential attack vectors for malicious actors.

At operation 308, the smart device acts on the request based on the security policies of the smart device. The security policies of the smart device, in at least some examples, are user controllable such that a user may maintain full control over data connections being permitted to the appliance. For example, the user may control the security policies to permit data connections from only certain devices within, or outside, the network, to permit the transfer of only certain types of data, to prohibit the transfer of certain types of information, etc.

Acting on the request may take various forms depending on the data associated with the request and the security policies. For example, acting on the request may include blocking the transfer of data to the appliance. Additionally, or alternatively, acting on the request may include allowing the transfer of data to the appliance. Additionally, or alternatively, acting on the request may include allowing the transfer of data to a first appliance within the network and blocking the transfer of data to a second appliance within the network. Additionally, or alternatively, acting on the request may include allowing the transfer of some data to an appliance within the network and blocking the transfer of other data to the same appliance. Additionally, or alternatively, acting on the request may include establishing, or blocking the establishment of, a communication tunnel or connection to the appliance from a device outside the network. In at least some examples, the smart device acts on the request based on contents of the request or data associated with the request, and the security policies, without user action in response to the request, indicating how to act on the request. In other examples, the user may be presented with a notification soliciting input on whether to permit or deny data transfer or connection according to the request.

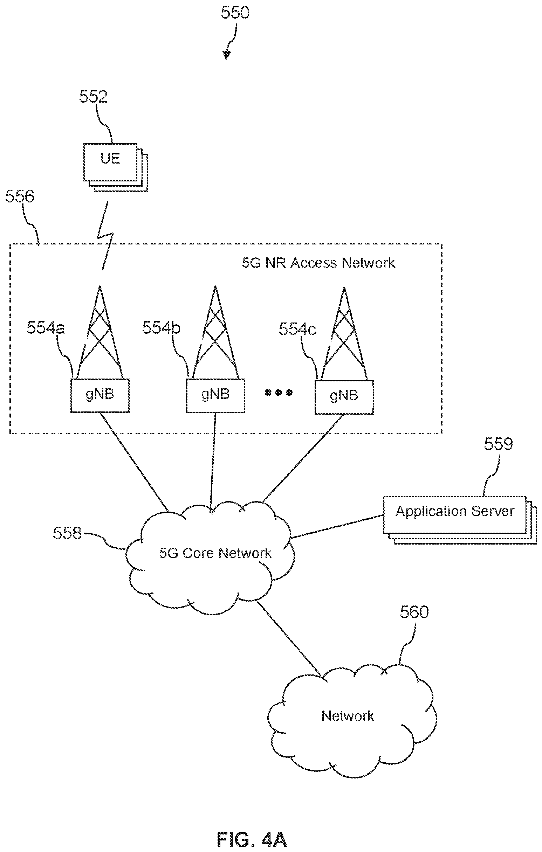

Turning now to FIG. 4A, an exemplary communication system 550 is described. Typically the communication system 550 includes a number of access nodes 554 that are configured to provide coverage in which UEs 552 such as cell phones, tablet computers, machine-type-communication devices, tracking devices, embedded wireless modules, smart devices (such as the smart device 108 described herein), IoT devices, and/or other wirelessly equipped communication devices (whether or not user operated), can operate. The access nodes 554 may be said to establish an access network 556. The access network 556 may be referred to as a radio access network (RAN) in some contexts. In a 5G technology generation an access node 554 may be referred to as a gigabit Node B (gNB). In 4G technology (e.g., long term evolution (LTE) technology) an access node 554 may be referred to as an enhanced Node B (eNB). In 3G technology (e.g., code division multiple access (CDMA) and global system for mobile communication (GSM)) an access node 554 may be referred to as a base transceiver station (BTS) combined with a basic station controller (BSC). In some contexts, the access node 554 may be referred to as a cell site or a cell tower. In some implementations, a picocell may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as Long Term Evolution (LTE), which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive Internet of Things (IoT). 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general internet service providers for laptops and desktop computers, competing with existing ISPs such as cable internet, and also will make possible new applications in internet of things (IoT) and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in radio-frequency (RF) spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554.

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

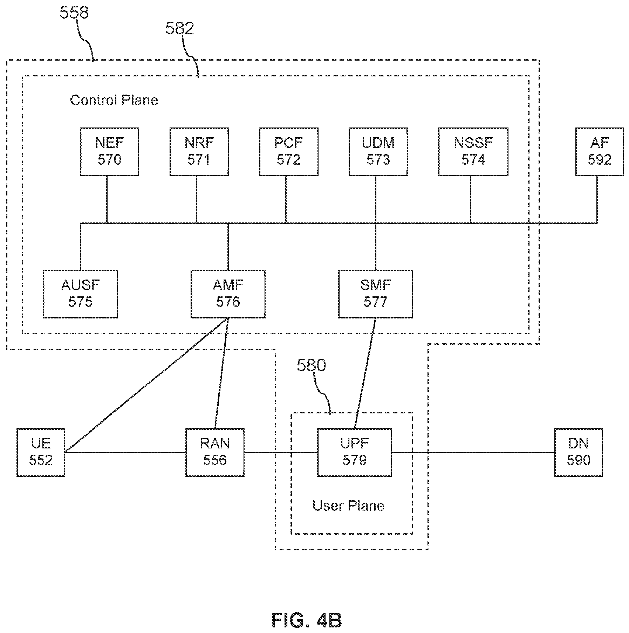

Turning now to FIG. 4B, further details of the core network 558 are described. In an embodiment, the core network 558 is a 5G core network. 5G core network technology is based on a service based architecture paradigm. Rather than constructing the 5G core network as a series of special purpose communication nodes (e.g., an HSS node, a MME node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access node 556, to a data network 590 (e.g., the network 560 illustrated in FIG. 4A). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and IP address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be execute on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552. For example, the core network 558 may provide a single network slice to the smart device 108 at a time.

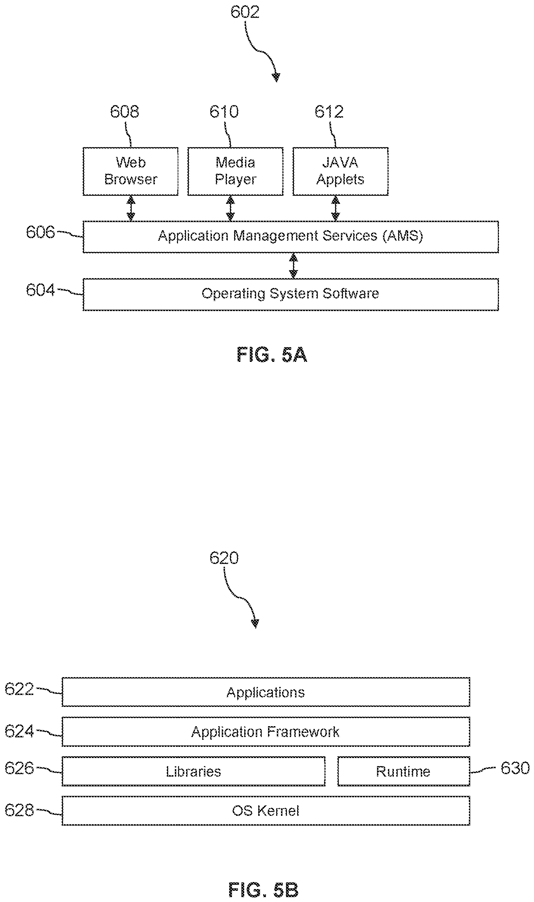

FIG. 5A illustrates a software environment 602 that may be implemented by the DSP 502. The DSP 502 executes operating system software 604 that provides a platform from which the rest of the software operates. The operating system software 604 may provide a variety of drivers for the handset hardware with standardized interfaces that are accessible to application software. The operating system software 604 may be coupled to and interact with application management services (AMS) 606 that transfer control between applications running on the UE 552. Also shown in FIG. 5A are a web browser application 608, a media player application 610, and JAVA applets 612. The web browser application 608 may be executed by the UE 552 to browse content and/or the Internet, for example when the UE 552 is coupled to a network via a wireless link. The web browser application 608 may permit a user to enter information into forms and select links to retrieve and view web pages. The media player application 610 may be executed by the UE 552 to play audio or audiovisual media. The JAVA applets 612 may be executed by the UE 552 to provide a variety of functionality including games, utilities, and other functionality.

FIG. 5B illustrates an alternative software environment 620 that may be implemented by the DSP 502. The DSP 502 executes operating system kernel (OS kernel) 628 and an execution runtime 630. The DSP 502 executes applications 622 that may execute in the execution runtime 630 and may rely upon services provided by the application framework 624. Applications 622 and the application framework 624 may rely upon functionality provided via the libraries 626.

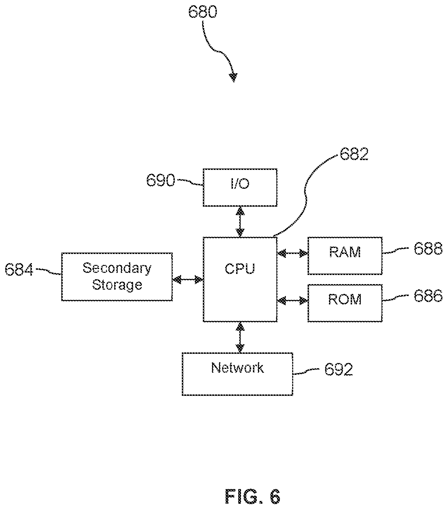

FIG. 6 illustrates a computer system 680 suitable for implementing one or more embodiments disclosed herein. The computer system 680 includes a CPU 682 (which may be referred to as a central processor unit or CPU) that is in communication with memory devices including secondary storage 684, read only memory (ROM) 686, random access memory (RAM) 688, input/output (I/O) devices 690, and network connectivity devices 692. The CPU 682 may be implemented as one or more CPU chips. In at least some examples, the computer system 680 is suitable for use in implementation as the smart device 108, described elsewhere herein.

It is understood that by programming and/or loading executable instructions onto the computer system 680, at least one of the CPU 682, the RAM 688, and the ROM 686 are changed, transforming the computer system 680 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 680 is turned on or booted, the CPU 682 may execute a computer program or application. For example, the CPU 682 may execute software or firmware stored in the ROM 686 or stored in the RAM 688. In some cases, on boot and/or when the application is initiated, the CPU 682 may copy the application or portions of the application from the secondary storage 684 to the RAM 688 or to memory space within the CPU 682 itself, and the CPU 682 may then execute instructions that the application is comprised of. In some cases, the CPU 682 may copy the application or portions of the application from memory accessed via the network connectivity devices 692 or via the I/O devices 690 to the RAM 688 or to memory space within the CPU 682, and the CPU 682 may then execute instructions that the application is comprised of. During execution, an application may load instructions into the CPU 682, for example load some of the instructions of the application into a cache of the CPU 682. In some contexts, an application that is executed may be said to configure the CPU 682 to do something, e.g., to configure the CPU 682 to perform the function or functions promoted by the subject application. When the CPU 682 is configured in this way by the application, the CPU 682 becomes a specific purpose computer or a specific purpose machine.

The secondary storage 684 is typically comprised of one or more disk drives or tape drives and is used for non-volatile storage of data and as an over-flow data storage device if RAM 688 is not large enough to hold all working data. Secondary storage 684 may be used to store programs which are loaded into RAM 688 when such programs are selected for execution. The ROM 686 is used to store instructions and perhaps data which are read during program execution. ROM 686 is a non-volatile memory device which typically has a small memory capacity relative to the larger memory capacity of secondary storage 684. The RAM 688 is used to store volatile data and perhaps to store instructions. Access to both ROM 686 and RAM 688 is typically faster than to secondary storage 684. The secondary storage 684, the RAM 688, and/or the ROM 686 may be referred to in some contexts as computer readable storage media and/or non-transitory computer readable media.

I/O devices 690 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 692 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 692 may provide wired communication links and/or wireless communication links (e.g., a first network connectivity device 692 may provide a wired communication link and a second network connectivity device 692 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC), and radio frequency identity (RFID). The radio transceiver cards may promote radio communications using 5G, 5G New Radio, or 5G LTE radio communication protocols. These network connectivity devices 692 may enable the CPU 682 to communicate with the Internet or one or more intranets. With such a network connection, it is contemplated that the CPU 682 might receive information from the network, or might output information to the network in the course of performing the above-described method steps. Such information, which is often represented as a sequence of instructions to be executed using CPU 682, may be received from and outputted to the network, for example, in the form of a computer data signal embodied in a carrier wave.

Such information, which may include data or instructions to be executed using CPU 682 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The CPU 682 executes instructions, codes, computer programs, scripts which it accesses from hard disk, floppy disk, optical disk (these various disk based systems may all be considered secondary storage 684), flash drive, ROM 686, RAM 688, or the network connectivity devices 692. While only one CPU 682 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 684, for example, hard drives, floppy disks, optical disks, and/or other device, the ROM 686, and/or the RAM 688 may be referred to in some contexts as non-transitory instructions and/or non-transitory information.

In an embodiment, the computer system 680 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 680 to provide the functionality of a number of servers that is not directly bound to the number of computers in the computer system 680. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 680, at least portions of the contents of the computer program product to the secondary storage 684, to the ROM 686, to the RAM 688, and/or to other non-volatile memory and volatile memory of the computer system 680. The CPU 682 may process the executable instructions and/or data structures in part by directly accessing the computer program product, for example by reading from a CD-ROM disk inserted into a disk drive peripheral of the computer system 680. Alternatively, the CPU 682 may process the executable instructions and/or data structures by remotely accessing the computer program product, for example by downloading the executable instructions and/or data structures from a remote server through the network connectivity devices 692. The computer program product may comprise instructions that promote the loading and/or copying of data, data structures, files, and/or executable instructions to the secondary storage 684, to the ROM 686, to the RAM 688, and/or to other non-volatile memory and volatile memory of the computer system 680.

In some contexts, the secondary storage 684, the ROM 686, and the RAM 688 may be referred to as a non-transitory computer readable medium or a computer readable storage media. A dynamic RAM embodiment of the RAM 688, likewise, may be referred to as a non-transitory computer readable medium in that while the dynamic RAM receives electrical power and is operated in accordance with its design, for example during a period of time during which the computer system 680 is turned on and operational, the dynamic RAM stores information that is written to it. Similarly, the CPU 682 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope as set out in the appended claims.

## Claims

1. A method implemented in a network, comprising:
writing, to a network resource function of a core network (558), a marker associated with a smart device (108);
allocating, via the core network, a network slice between the core network and the smart device having the smart device as a network function virtualization (NFV) endpoint;
allocating, via the core network, a user plane function (579) to the smart device;
receiving, by a server (112), a request to allocate a second user plane function to the smart device; and
denying, by the server (112), the request to allocate the second user plane function to the smart device based on the marker in the network resource function of the core network and the allocated user plane function.

2. The method of claim 1, wherein the marker instructs the core network to permit allocation of only one user plane function to the smart device at any point in time.

3. The method of claim 1, wherein the smart device exists in a local network (114) that includes multiple appliances (102, 104, 106), and wherein communication between the core network and any of the multiple appliances is performed via the network slice and through the smart device.

4. The method of claim 3, wherein the smart device receives a request to connect to the appliance from a first device via the network slice, and wherein the smart device blocks access by the first device to the appliance based on security policies of the smart device.

5. The method of claim 3, wherein the smart device receives a request to connect to the appliance from a first device via the network slice, and wherein the smart device permits access by the first device to the appliance based on security policies of the smart device.

6. The method of claim 5, wherein the smart device receives a request to connect to the appliance from a second device via the network slice, and wherein the smart device blocks access by the first device to the appliance based on security policies of the smart device.

7. The method of claim 3, wherein the smart device receives a request from the appliance to transmit first data to a first device via the network slice, and wherein the smart device blocks transmission of the first data to the first device based on security policies of the smart device and content of the first data.

8. The method of claim 7, wherein the smart device receives a request from the appliance to transmit second data to the first device via the network slice, and wherein the smart device permits transmission of the second data to the first device based on security policies of the smart device and content of the second data.

## Patentansprüche

1. Verfahren, das in einem Netzwerk implementiert ist, umfassend:
Schreiben einer Markierung, die einer intelligenten Vorrichtung (108) zugeordnet ist, in eine Netzwerkressourcenfunktion eines Kernnetzwerks (558);
Zuweisen eines Netzwerk-Slices zwischen dem Kernnetzwerk und der intelligenten Vorrichtung über das Kernnetzwerk, wobei die intelligente Vorrichtung als Endpunkt der Netzwerkfunktionsvirtualisierung (NFV) dient;
Zuweisen einer Benutzerebenenfunktion (579) über das Kernnetzwerk an die intelligente Vorrichtung;
Empfangen einer Anforderung durch einen Server (112), der intelligenten Vorrichtung eine zweite Benutzerebenenfunktion zuzuweisen; und
Ablehnen der Anforderung, der intelligenten Vorrichtung die zweite Benutzerebenenfunktion zuzuweisen, durch den Server (112), basierend auf der Markierung in der Netzwerkressourcenfunktion des Kernnetzwerks und der zugewiesenen Benutzerebenenfunktion.

2. Verfahren nach Anspruch 1, wobei die Markierung das Kernnetzwerk anweist, die Zuweisung von nur einer Benutzerebenenfunktion an die intelligente Vorrichtung zu einem beliebigen Zeitpunkt zuzulassen.

3. Verfahren nach Anspruch 1, wobei die intelligente Vorrichtung in einem lokalen Netzwerk (114) vorhanden ist, das mehrere Einrichtungen (102, 104, 106) einschließt, und wobei die Kommunikation zwischen dem Kernnetzwerk und einer beliebigen der mehreren Einrichtungen über den Netzwerk-Slice und durch die intelligente Vorrichtung durchgeführt wird.

4. Verfahren nach Anspruch 3, wobei die intelligente Vorrichtung eine Anforderung zur Verbindung mit der Einrichtung von einer ersten Vorrichtung über den Netzwerk-Slice empfängt, und wobei die intelligente Vorrichtung den Zugriff der ersten Vorrichtung auf die Einrichtung basierend auf Sicherheitsrichtlinien der intelligenten Vorrichtung blockiert.

5. Verfahren nach Anspruch 3, wobei die intelligente Vorrichtung eine Anforderung zur Verbindung mit der Einrichtung von einer ersten Vorrichtung über den Netzwerk-Slice empfängt, und wobei die intelligente Vorrichtung den Zugriff der ersten Vorrichtung auf die Einrichtung basierend auf Sicherheitsrichtlinien der intelligenten Vorrichtung zulässt.

6. Verfahren nach Anspruch 5, wobei die intelligente Vorrichtung eine Anforderung zur Verbindung mit der Einrichtung von einer zweiten Vorrichtung über den Netzwerk-Slice empfängt, und wobei die intelligente Vorrichtung den Zugriff der ersten Vorrichtung auf die Einrichtung basierend auf Sicherheitsrichtlinien der intelligenten Vorrichtung blockiert.

7. Verfahren nach Anspruch 3, wobei die intelligente Vorrichtung eine Anforderung von der Einrichtung empfängt, erste Daten über den Netzwerk-Slice an eine erste Vorrichtung zu übertragen, und wobei die intelligente Vorrichtung die Übertragung der ersten Daten an die erste Vorrichtung basierend auf den Sicherheitsrichtlinien der intelligenten Vorrichtung und dem Inhalt der ersten Daten blockiert.

8. Verfahren nach Anspruch 7, wobei die intelligente Vorrichtung eine Anforderung von der Einrichtung empfängt, zweite Daten über den Netzwerk-Slice an die erste Vorrichtung zu übertragen, und wobei die intelligente Vorrichtung die Übertragung der zweiten Daten an die erste Vorrichtung basierend auf den Sicherheitsrichtlinien der intelligenten Vorrichtung und dem Inhalt der zweiten Daten zulässt.

## Revendications

1. Procédé mis en œuvre dans un réseau, comprenant :
l'écriture, à une fonction de ressource réseau d'un réseau central (558), d'un marqueur associé à un dispositif intelligent (108) ;
l'attribution, par le biais du réseau central, d'une tranche de réseau entre le réseau central et le dispositif intelligent, ce dernier étant un point d'extrémité de virtualisation des fonctions de réseau (NFV) ;
l'attribution, par le biais du réseau central, d'une fonction de plan d'utilisateur (579) au dispositif intelligent ;
la réception, par un serveur (112), d'une demande d'attribution d'une seconde fonction de plan d'utilisateur au dispositif intelligent ; et
le refus, par le serveur (112), de la demande d'attribution de la seconde fonction de plan d'utilisateur au dispositif intelligent sur la base du marqueur dans la fonction de ressource de réseau du réseau central et de la fonction de plan d'utilisateur attribuée.

2. Procédé selon la revendication 1, dans lequel le marqueur ordonne au réseau central d'autoriser l'attribution d'une seule fonction de plan d'utilisateur au dispositif intelligent à tout moment.

3. Procédé selon la revendication 1, dans lequel le dispositif intelligent existe dans un réseau local (114) qui comprend plusieurs appareils (102, 104, 106), et dans lequel la communication entre le réseau central et un quelconque des multiples appareils est effectuée par le biais de la tranche de réseau et par l'intermédiaire du dispositif intelligent.

4. Procédé selon la revendication 3, dans lequel le dispositif intelligent reçoit une demande de connexion à l'appareil de la part d'un premier dispositif par le biais de la tranche de réseau, et dans lequel le dispositif intelligent bloque l'accès du premier dispositif à l'appareil sur la base de politiques de sécurité du dispositif intelligent.

5. Procédé selon la revendication 3, dans lequel le dispositif intelligent reçoit une demande de connexion à l'appareil de la part d'un premier dispositif par le biais de la tranche de réseau, et dans lequel le dispositif intelligent autorise l'accès du premier dispositif à l'appareil sur la base de politiques de sécurité du dispositif intelligent.

6. Procédé selon la revendication 5, dans lequel le dispositif intelligent reçoit une demande de connexion à l'appareil de la part d'un second dispositif par le biais de la tranche de réseau, et dans lequel le dispositif intelligent bloque l'accès du premier dispositif à l'appareil sur la base de politiques de sécurité du dispositif intelligent.

7. Procédé selon la revendication 3, dans lequel le dispositif intelligent reçoit une demande de l'appareil pour transmettre des premières données à un premier dispositif par le biais de la tranche de réseau, et dans lequel le dispositif intelligent bloque la transmission des premières données au premier dispositif sur la base de politiques de sécurité du dispositif intelligent et du contenu des premières données.

8. Procédé selon la revendication 7, dans lequel le dispositif intelligent reçoit une demande de l'appareil pour transmettre des secondes données au premier dispositif par le biais de la tranche de réseau, et dans lequel le dispositif intelligent autorise la transmission des secondes données au premier dispositif sur la base de politiques de sécurité du dispositif intelligent et du contenu des secondes données.
